# EUROPEAN PATENT SPECIFICATION

(11) **EP 3 359 886 B1**
(45) Date of publication and mention of the grant of the patent: **07.08.2019**
(21) Application number: 16801559.2
(22) Date of filing: 10.10.2016
(51) Int. Cl.: F24S 10/00, F24S 20/20, F24S 10/80

(54) **VOLUMETRIC RECEIVER**
VOLUMETRISCHER EMPFÄNGER
RÉCEPTEUR VOLUMÉTRIQUE

(30) Priority: 08.10.2015 IT UB20154238
(43) Date of publication of application: 15.08.2018
(73) Proprietor: Fondazione Bruno Kessler, 38122 Trento (IT)
(72) Inventor: ALBERTI, Fabrizio, 38065 Mori (TN) (IT); ROCCABRUNA, Mattia, 38040 Fornace (TN) (IT); CREMA, Luigi, 38056 Levico Terme (TN) (IT); ROMERO ALVAREZ, Manuel, 28035 Madrid (ES); GONZALEZ-AGUILAR, José, 28931 Mostoles (ES); SANTIAGO SACRISTAN, Sergio, 28032 Madrid (ES)
(74) Representative: Marchioro, Paolo
(86) International application number: PCT/IB2016/056050
(87) International publication number: WO 2017/060882

(56) References cited:
- WO-A1-2004/023048
- WO-A2-2013/160872
- DE-B3-102005 055 955
- US-A- 4 018 211
- US-A- 4 106 479

## Description

The invention relates to an improved volumetric receiver configured to implement the thermal exchange between a surrounding heat transfer fluid and the radiation emitted by a heat source and incident on the receiver itself. The known art includes special devices, defined in technical jargon as volumetric receivers or also in more general terms as heat exchangers, designed to transfer the thermal energy generated by the radiation emitted by a heat source and incident on a face of such devices exposed to a heat transfer fluid, usually air, flowing through the same devices.

In particular, as can be understood also by reading the scientific article entitled *"*On the design and evaluation of open volumetric air receiver for process heat applications" by Piyush Sharma, Rakesh Sarma, Laltu Chandra, Rajiv Shekhar, P.S. Ghoshdastidar (Energy Procedia 57 (2014) 2994 - 3003), the expression "volumetric receiver" means a heat exchanger with direct absorption, in the sense that the receiver is able to transfer the volume of fluid to be heated, and with a parallel flow, in the sense that the direction of travel of the fluid coincides with the direction of the radiation energy concentrated on the receiver itself. These receivers are typically installed on concentration towers arranged in a central position in systems related to solar technologies. More specifically, a volumetric receiver is made of a permeable material that progressively absorbs the concentrated solar radiation entering the empty space defined by the structure of the receiver itself through an exposed face of the latter.

The volumetric receiver then transfers the heat energy to a heat transfer fluid, that is, a heat transfer medium flowing through the structure of the receiver in the same direction as the propagation of light radiation. The particular heat exchange just described between the volumetric receiver and the heat transfer fluid that surrounds it is known as "volumetric effect" in technical jargon.

The absorption coefficient of these volumetric receivers is high, approximately in the range of 0.9-0.96.

Volumetric receivers are subjected to high radiation fluxes, about 700-800 kW/m². Thus, they reach high temperatures.

Thanks to the volumetric effect, the temperature of the receiver's front surface is lower than the air temperature at the outlet. Therefore, the dispersion of radiation in the atmosphere is reduced.

The efficiency of a volumetric receiver depends on the geometric, optical and thermo-physical properties of the porous material with which it is made and on the heat transfer medium used.

As noted above, the aforementioned volumetric receivers are used in different types of applications, for example in systems related to solar technologies, where there is the need to take advantage of a hot fluid at very high temperatures (>1000°C), usually air, as an energy source in power cycles, for the production of steam at high temperature or for use in chemical reactors requiring high temperatures.

There are currently different types of volumetric receivers, all having a solid body in which there are a plurality of through channels, through which said fluid to be heated flows.

In particular, the different embodiments of the known art alternately create the aforementioned solid body of volumetric receivers in metal wire mesh or ceramic foams or even as a ceramic monolith.

In the case of volumetric receivers with the solid body comprised of a ceramic monolith, the aforesaid channels are usually substantially parallel and independent of one another.

However, the principle of operation at the base of the different types of receivers described above remains the same, that is, the radiation emitted by the heat source, concentrated on an exposed face of the receiver itself, leads to the heating of said solid body, which in turn transfers the induced heat energy to the fluid flowing through the channels made in it.

In detail, the heat transfer between the receiver and the heat transfer fluid occurs through direct contact between the latter and the inner surfaces of said through channels. For this reason, the inner surfaces of the through channels are called "wetted surfaces" in technical jargon.

However, these types of volumetric receivers according to the prior art substantially share also the same recognized drawbacks.

In particular, a first drawback of the volumetric receivers according to the prior art lies in that they have a low index of radiation penetration, that is, the radiation incident on the volumetric receiver on its exposed face is not able to penetrate inside the solid body beyond a certain rather limited thickness, which normally is in the order of a few millimetres.

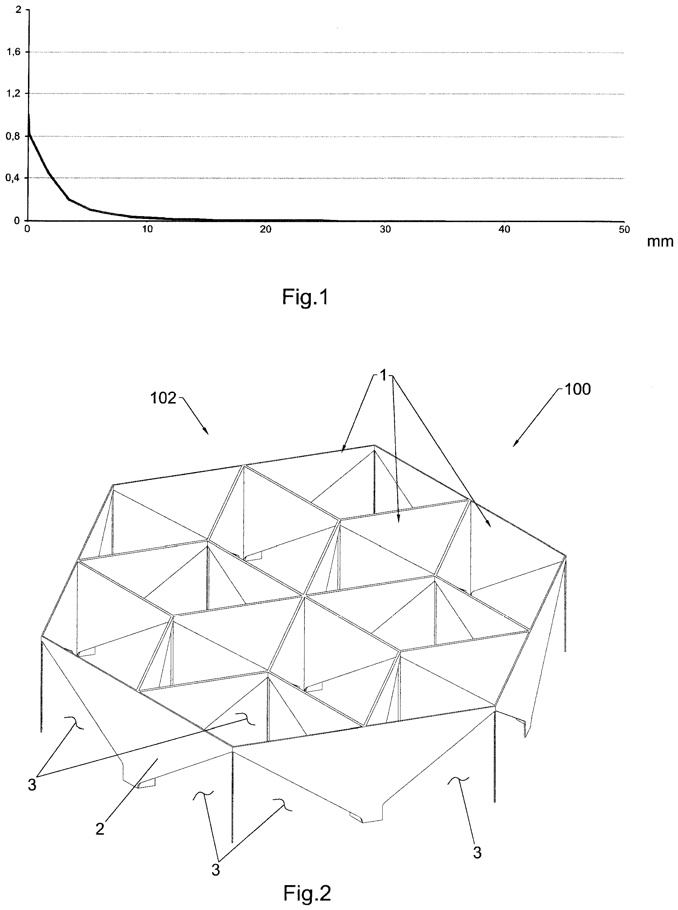

This means that the heating of the solid body of the volumetric receivers of the prior art due to the direct action of radiation takes place substantially at a superficial level, thus resulting in the typical exponential decay shown in Figure 1 and related to the capacity of heat exchange between the receivers themselves and the surrounding heat transfer fluid as the distance from said exposed face increases.

A further drawback typical of volumetric receivers with a ceramic monolith solid body lies in that they are characterized by a high index of fluid dynamic instability. In fact, this instability occurs because the channels made in the ceramic monolith, as noted, are independent of each other and the fluid that flows through them warms up and tends to become less viscous. The combination of these two conditions, namely, the decreased propensity of the fluid to flow within each channel, and the fact that the fluid itself does not have alternative escape routes, results in the obstruction of the channel itself and consequently causes a further increase in temperature locally, also known by the technical term of "hot spot". This increase in the local temperature also tends to spread to the channels adjacent to the one in which the hot spot phenomenon occurred, resulting in an avalanche effect which, disadvantageously, may lead to the obstruction of the entire volumetric receiver, thus reducing its efficiency to a minimum.

A further drawback is, in general, a result of the structure of the volumetric receivers of the known art and consists in the fact that it is not possible to predetermine, or at least control, the directionality of the heat transfer along the relative solid bodies. In other words, with the prior art volumetric receivers it is not possible to impose a direction and a preferential direction on the transfer of heat along said solid bodies. This means that the prior art volumetric receivers, which as previously noted are heated by the direct action of the radiation solely at the surface level, have a poor ability to concentrate the heat transfer process towards their interior. This therefore contributes to reducing their penetration index.

Finally, disadvantageously, the fact of structuring the volumetric receivers of the prior art as described above means that a designer has a limited number of physical parameters available to adapt and optimize the volumetric receiver itself to the specifications of the particular application to be implemented.

More specifically, according to the characteristics of the system to be implemented and the objects to be achieved, to increase the effectiveness of the prior art volumetric receivers it is only possible to intervene almost exclusively on the number of channels to be made in the related solid bodies, on their diameter, and possibly on the type of material used to finish the surface of the receivers themselves.

Document WO 2004/023048 A1 discloses a volumetric receiver configured to absorb the radiation emitted by a heat source and incident on an exposed face of the volumetric receiver and to transfer the thermal energy induced by the absorption to a surrounding heat transfer fluid, the volumetric receiver comprising a plurality of hollow cells having the same geometric shape and whose longitudinal axes are substantially orthogonal with respect to the exposed face, said hollow cells being adjacent and stably connected to one another so as to create at least one level substantially parallel to said exposed face, each one of said hollow cells defining a channel that is open at both its opposing ends according to said longitudinal axis in such a way as to allow the flow of said heat transfer fluid in a direction parallel to the direction of the radiation.

The present invention intends to overcome all the mentioned drawbacks.

In particular, it is one of the objects of the invention to provide a volumetric receiver with a higher index of penetration to radiation compared to prior art volumetric receivers.

It is another object of the invention to provide a volumetric receiver that is immune or, at least, scarcely subject to fluid dynamic instability due to the appearance of the phenomenon known as hot spots.

It is still another object of the invention to provide a volumetric receiver structured in such a way as to allow the definition and optimization of the preferential direction of heat transfer through its solid body.

It is a further object of the invention to provide a volumetric receiver that offers the possibility to set a large number of physical parameters in order to optimize its performance according to the design specifications of the particular application to be implemented.

It is a final object of the invention to provide a volumetric receiver structured in such a way that it can be produced quickly and easily by means of additive manufacturing techniques, in particular by means of techniques involving the sintering of metal powders.

The said objects are achieved by means of a volumetric receiver in accordance with the main claim.

Further characteristics of the volumetric receiver that is the subject of the invention are described in the dependent claims.

The said objects, together with the advantages that will be mentioned below, will be highlighted in the description of some preferred embodiments of the invention that are provided by way of non-limiting example, with reference to the attached drawings, wherein:
- Figure 1 shows the graph related to the exponential decay of the heat exchange capability between the volumetric receivers of the prior art and the surrounding heat transfer fluid as the distance from the exposed face of the same receiver increases;
- Figure 2 shows an axonometric view of a first embodiment of the volumetric receiver that is the subject of the invention;
- Figure 3 shows a top view of the first embodiment of the volumetric receiver of the invention shown in Figure 2;
- Figure 4 shows a side view of the first embodiment of the volumetric receiver of the invention shown in Figure 2;
- Figure 5 shows an axonometric view of a second embodiment of the volumetric receiver of the invention;
- Figure 6 shows a top view of the second embodiment of the volumetric receiver of the invention shown in Figure 5, where the hollow cells pertaining to the first, second and third level are highlighted;
- Figure 7 shows a side view of the second embodiment of the volumetric receiver of the invention shown in Figure 5;
- Figure 8 schematically shows a solar-type plant in which two volumetric receivers of the invention are used, respectively shown in Figures 2-4 and in Figures 5-7;
- Figure 9 shows the graph related to the heat exchange capacity achievable with the volumetric receivers of the invention as the distance from the exposed face of the same receiver increases;
- Figure 10 shows an axonometric view of the preferred embodiment of the hollow cell used for the definition of the volumetric receivers of the invention;
- Figure 11 shows a top view of the hollow cell shown in Figure 10;
- Figure 12 shows a side view of the hollow cell shown in Figure 10.

It should be noted, first, that the description that follows, although relating to two particular examples of volumetric receivers carried out according to the invention, is also valid for any other volumetric receiver structured in a different manner, provided that the latter has the basic characteristics of the invention contained in the main claim, and provided that it is made following the specific design and construction principles of the present invention presented below. Furthermore, it should be noted that, for the purposes of simplicity and clarity, the technical advantages obtained with the volumetric receivers of the invention, in particular those resulting from one or more of the characteristics that distinguish them from the volumetric receivers of the prior art, will be highlighted only after introducing all the above technical characteristics. Returning to the aforementioned particular embodiments of the volumetric receivers of the invention, they are represented as a whole in Figures from 2 to 4 and in Figures from 5 to 7, where they are indicated respectively by **100** and **200.**

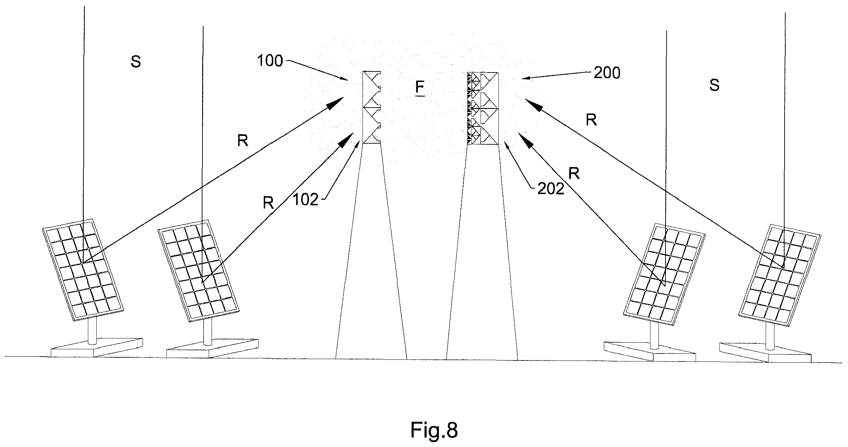

As already noted, the volumetric receivers, or more in general the heat exchangers, **100** and **200** of the invention are configured to implement the heat exchange between a surrounding heat transfer fluid **F,** shown in Figure 8 as a dotted area, and radiation **R** emitted by a heat source **S** and incident on an exposed face **102** and **202** of the same volumetric receivers **100** and **200.** Even more in detail, the volumetric receivers **100** and **200** are configured to absorb radiation **R** emitted by said heat source **S** and incident on the exposed face **102** and **202** and to transfer the thermal energy induced by said absorption to the heat transfer fluid **F.**

It should be clarified that in the present context, the exposed face **102** and **202** of the volumetric receivers **100** and **200** of the invention means the surface of the latter lying substantially on a plane **π₁** and suited to be directly facing said heat source **S.**

As specifically regards the volumetric receiver **100** shown in Figures from 2 to 4, which shows the simplest embodiment of the invention, it is equipped with a plurality of hollow cells **1** having substantially orthogonal longitudinal axes with respect to the exposed face **102** defined previously. As shown in Figure 2, each hollow cell **1** clearly defines a channel open at the level of both its ends, which are opposite to each other, according to said longitudinal axis. This channel allows the flow of the heat transfer fluid **F** within each hollow cell **1** in a direction parallel to the direction of the radiation **R,** thus defining the typical volumetric effect of volumetric receivers.

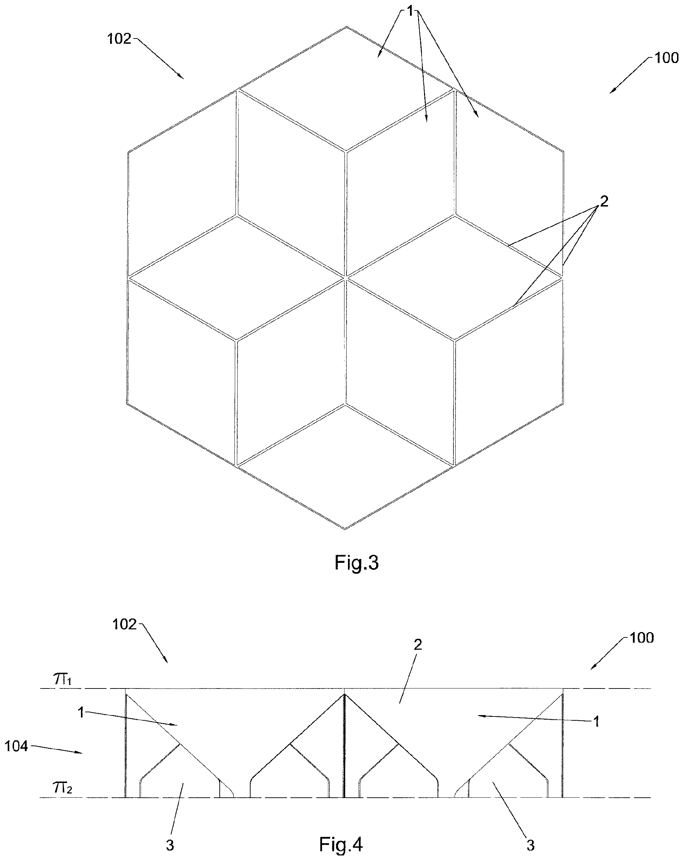

In said volumetric receiver 100, the relative hollow cells **1** are adjacent and stably connected to each other so as to create at least one level **104** substantially parallel to the exposed face **102,** as shown in Figure 3.

It should be noted that in the present context the term "level(s)" means the height of the plane or planes **π₂...πₙ** on which the bases of a plurality of adjacent hollow cells **1** lie, compared to the reference plane **π₁** defined by said exposed face **102** and **202** of the volumetric receivers **100** and **200** carried out according to the invention.

A further characteristic of the volumetric receiver **100** of the invention, as seen in Figure 2 and in Figure 4, is that each one of the hollow cells **1** pertaining to it is provided with at least one opening **3** made at the level of the lateral surface **2.**

Also, according to the invention, all of said hollow cells **1** pertaining to the volumetric receiver **100** of the invention have the same geometric shape.

In the volumetric receiver **100** of the invention shown in Figure 2 and in Figure 3 said hollow cells **1** defined on the same level **104** have the same size, in addition to having the same geometric shape. Specifically, size is understood to mean the width, the height and the length of each hollow cell **1** as well as the thickness of the lateral surfaces **2** of each one of said hollow cells **1.**

As will also be described below, these dimensional characteristics determine the so-called degree of porosity of each individual hollow cell **1,** where degree of porosity means the value of the ratio between the solid surfaces and the empty space determined in said hollow cell **1.**

The second embodiment of the volumetric receiver **200** of the invention, as shown in Figures from 5 to 7, envisages that the respective hollow cells **1** are made in such a way as to create three levels **204a, 204b** and **204c** parallel and superimposed to one another in an orthogonal direction with respect to the relative exposed face **202.**

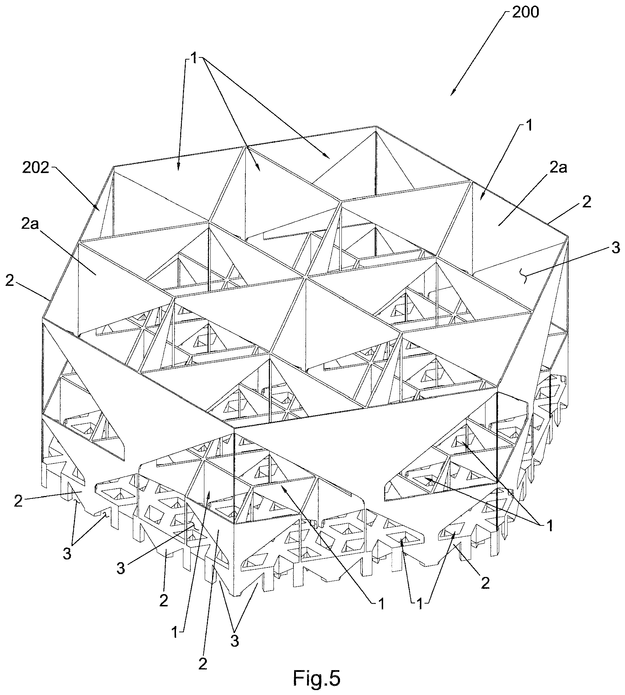

As shown in Figure 5, for each level **204a, 204b** and **204c,** the hollow cells **1** are constructed adjacent and stably connected to one another.

The superimposition of said levels **204a, 204b** and **204c,** each comprising a plurality of hollow cells **1** adjacent to one another, is implemented in such a way that the channel of each one of the hollow cells **1** defined in a first level **204a, 204b** and **204c** is in direct communication with the channel of at least one of the hollow cells **1** pertaining to a second level **204a, 204b** and **204c** immediately adjacent to the first level just mentioned above. Thus this characteristic enables the attainment of the aforementioned volumetric effect even in the case where the volumetric receiver **200** of the invention has multiple levels.

Furthermore, according to the invention even the hollow cells **1** defining the volumetric receiver **200** are provided with at least one opening **3** made at the level of its lateral surface **2.**

Regarding said hollow cells **1** of the volumetric receiver **200,** they all have the same geometrical shape, like in the case of the volumetric receiver **100.**

As is further shown in Figures from 5 to 7, according to the invention the hollow cells **1** pertaining to the same level **204a, 204b** or **204c,** in addition to having the same geometric shape, are also the same size.

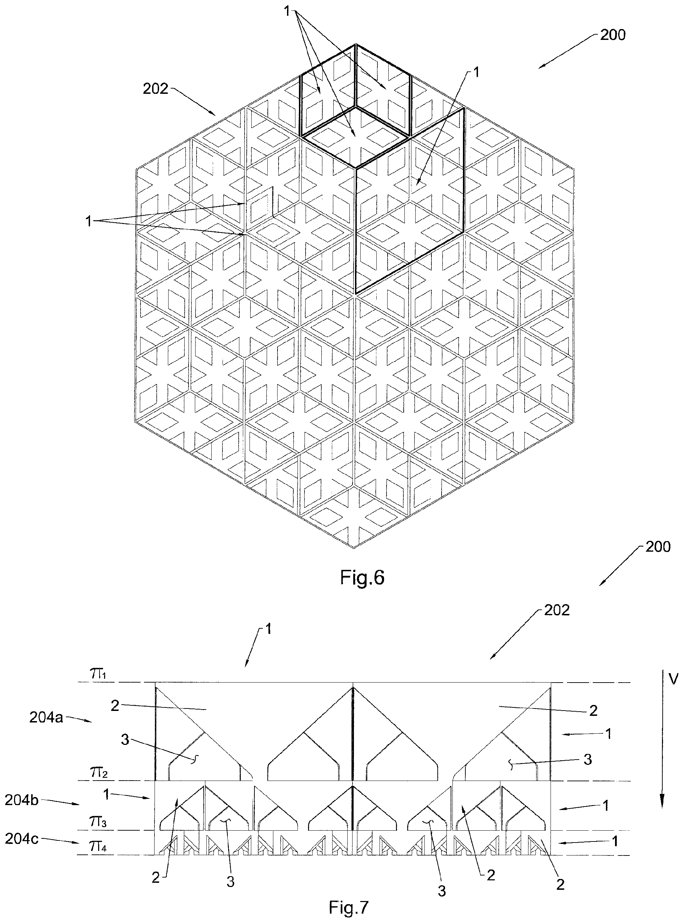

Finally, in the case of the volumetric receiver **200** with the hollow cells **1** distributed on three levels **204a, 204b** and **204c,** the invention envisages, according to the incoming direction **V** towards the receiver **200** itself as indicated by the arrow in Figure 7, that the hollow cells **1** of each level have a size that is smaller than or equal to that of the hollow cells **1** defined on the previous level, and have a size that is greater than or equal to that of the hollow cells defined on the subsequent level.

The hollow cells **1** of the volumetric receiver **200** that define the first layer **204a** closest to the exposed face **202** are larger in size than the hollow cells **1** pertaining to the second level **204b** immediately below and, in turn, the latter hollow cells **1** are larger in size than the hollow cells **1** defined on the third and last level **204c.**

Generalizing the inventive concept at the base of the volumetric receivers in question, it can be said that according to the present invention the hollow cells **1** are distributed in such a way as to define a number of levels equal to or greater than one, where, taking as a reference the exposed face **202** of the receiver **200** in the incoming direction indicated by the arrow **V** in Figure 7, the hollow cells **1** of each level **204a, 204b** and **204c** are smaller than or equal to the hollow cells **1** defined on the previous level and are larger than or equal to the hollow cells **1** defined on the subsequent level.

Even more generally, it can be said that according to the present invention the hollow cells **1** are distributed in such a way as to define a number of levels **204a, 204b** and **204c** equal to or greater than one, where, taking as a reference the exposed face **202** of the receiver **200,** in the incoming direction indicated by the arrow **V** in Figure 7, the hollow cells **1** of each level have a degree of porosity lower than or equal to that of the hollow cells **1** defined on the subsequent level and have a degree of porosity higher than or equal to that of the hollow cells **1** defined on the previous level. As noted above, the expression "degree of porosity" indicates the value of the ratio between the solid surfaces and the empty space in each one of the hollow cells **1.**

In summary, the structure of the volumetric receivers **200** of the invention based on the aforementioned construction principle can be defined as a "hierarchical geometric" structure.

According to the invention, all the hollow cells **1** pertaining to the same volumetric receiver **100** and **200** of the invention have the same geometric shape and, preferably, the hollow cells **1** that define the same level also have the same size. Clearly, each hollow cell **1** of a volumetric receiver **100** and **200** of the invention must be provided with at least one opening **3** defined on the respective lateral surface **2.**

Thus, the main features of volumetric receivers **100** and **200** that are the subject of the present invention have been introduced. Therefore, the following is a presentation of the technical advantages obtained with the aforementioned characteristics.

First, the presence of at least one opening **3** on the lateral surface **2** of each one of the hollow cells **1** facilitates the greater penetration of the radiation **R** emitted by the heat source **S** inside the body of the volumetric receiver **100** and **200** of the invention.

More specifically, taking as a reference the volumetric receiver **200** shown in Figure 5, the radiation **R** entering the volumetric receiver through the exposed face **202** on the one hand intercepts the inner lateral surfaces **2a** of the hollow cells **1** pertaining to the first level **204a,** thus resulting in direct heat exchange, by absorption, between the radiation R itself and the lateral surfaces **2,** and on the other hand continues its journey through the openings **3,** reaching the hollow cells **1** of the second level **204b** immediately below. The same situation is progressively repeated for each level of hollow cells **1** defined in the volumetric detector **200** of the invention. In this way, advantageously, the radiation **R** is able to penetrate deeper into the volumetric receiver **200** of the invention than is the case in prior art volumetric receivers, thereby increasing the amount of the inner surface of the receiver **200** itself involved in a direct heat exchange with said radiation **R.** In particular, this thermal transfer affects a portion of the inner surface of the volumetric receivers **200** of the invention located at greater depth compared to what occurs in the volumetric receivers of the prior art.

In other words, the presence of said openings **3** enables the volumetric receivers **100** and **200** of the invention to have a greater penetration index to the radiation **R** than that achievable with prior art volumetric receivers.

As regards the improved heat transfer efficiency observed between said radiation **R** and the volumetric receivers of the invention compared to that of prior art receivers, this is also obtained due to the progressive increase in the degree of porosity as a result of the progressive reduction of the size of the hollow cells **1** from one level to the next, taking as a reference the direction shown in Figure 7 by the arrow **V.**

In fact, this embodiment enables the attainment of a double positive effect. First of all, the presence of hollow cells **1** with a lower degree of porosity, thus with larger size and in particular with larger openings **3** in the vicinity of the exposed face **202** of the receiver **200,** facilitates greater penetration of the radiation **R** towards the deeper levels. At the same time, the increased level of porosity due to the smaller size of the hollow cells **1** at the deeper levels, minimizes the possibility of re-emission of said radiation **R** towards the outside in these levels. This means that the energy of the radiation **R** entering the volumetric receivers of the invention is almost completely transferred to their solid body.

The presence of said openings **3** also enables the attainment of a further advantage over the prior art receivers. In fact, said openings **3,** as shown in Figures 2 and 5 as regards the two examples of volumetric receivers **100** and **200** of the invention, place all the channels, or cavities, defined in the receivers **100** and **200** themselves in communication with one another.

In this way, in fact, the heat transfer fluid suited to receive the heat from the volumetric receiver **100** and **200** of the invention is free to flow from one channel of hollow cells **1** to another, said hollow cells **1** being laterally adjacent to each other and superimposed over each other, wherein the heat transfer fluid is not forced to follow a predetermined path.

This advantageously increases the heat exchange factor among the various channels defined inside the volumetric receiver **100** and **200** of the invention, thereby preventing the occurrence of increases in local temperature, known as hot spots, and the consequent obstruction of the channels themselves due to the decreased viscosity of the fluid, as frequently occurs when using prior art receivers.

Additionally, the decision to construct the volumetric receivers of the invention by creating a plurality of hollow cells **1** all having the same geometric shape and varying their size according to the level on which they lie on the one hand enables the simplification of their design and on the other improves their efficiency compared to prior art receivers, as discussed above.

In other words, the inventive concept underlying the design and construction of the volumetric receivers of the invention lies in the definition of a single geometric shape for the hollow cell **1,** in the definition of the number of hollow cells to be constructed next to each other for each level, and in the selection of the number of levels on which to distribute said hollow cells, progressively varying their degree of porosity and hence their size from one level to another. Given the above, it is also evident that the designer and manufacturer of the volumetric receivers of the invention has a large number of physical parameters available for modification in order to optimize the shape and therefore the efficiency of the volumetric receivers themselves according to the intended use.

In particular, it is possible to choose the size of the volumetric receiver as a whole, the number of levels in which to divide the receiver, the size of the hollow cells for each level, and as a result the number of hollow cells for each level.

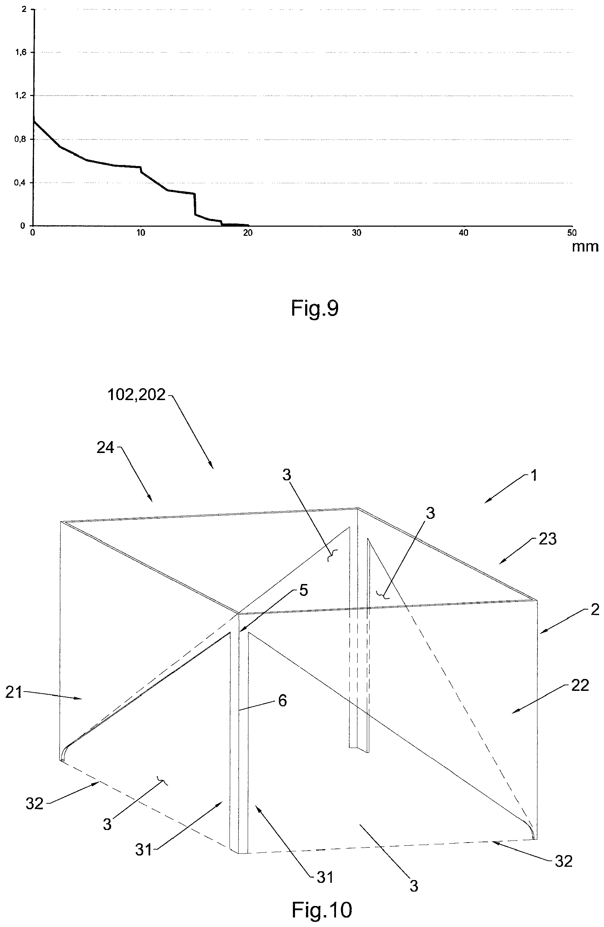

It is also possible to modify, for each level, the thickness of the side walls of the hollow cells. In this regard, the freedom of choice in relation to the thickness advantageously enables the definition of a preferential path for the transfer of heat towards the inside of the volumetric receiver. In other words, it is possible to optimize the volumetric receiver so that it is able to promote the transfer of the heat accumulated in the vicinity of its exposed face towards the inner parts. Even this solution can be used to homogenize as much as possible the heat exchange capability between the volumetric receivers of the invention and the surrounding heat transfer fluid, by increasing the distance from said exposed faces, as shown in the graph in Figure 9.

A further physical parameter which the designer of a volumetric receiver **100** and **200** of the invention can modify is related to the geometric shape of said hollow cells.

In this regard, the applicant has observed from experimental tests that the most efficient basic geometric form to give the hollow cells, with which to define the volumetric receiver **100** and **200** of the invention, is the one shown in Figures from 10 to 12, where they are indicated by **1.**

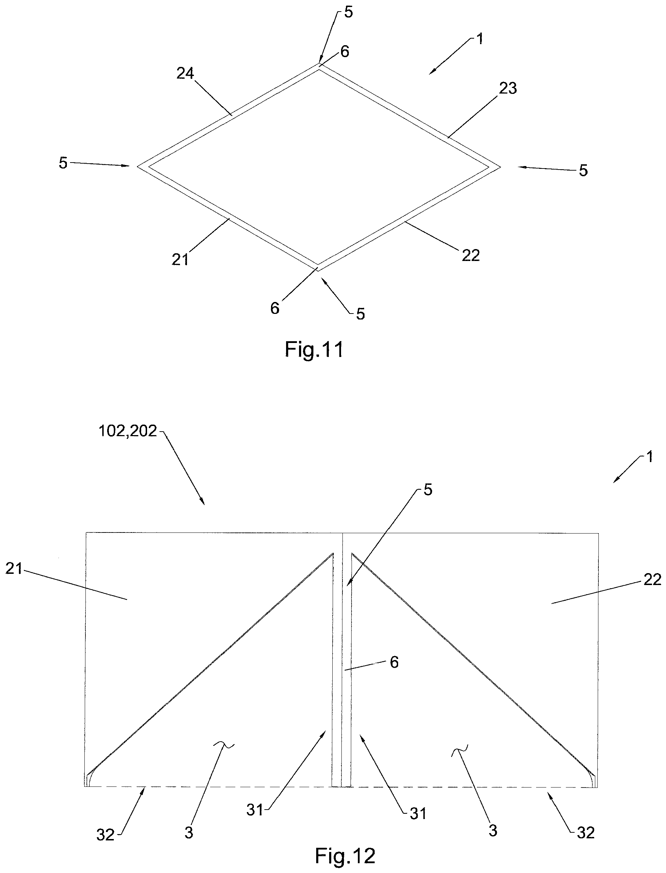

As shown in Figure 11, in particular, each hollow cell **1** has, in top view, the shape of parallelogram. More specifically, the parallelogram is a rhomboid shape.

A first advantage obtained by the choice of said rhomboid shape for the hollow cells **1** lies in the possibility to create the volumetric receivers **100** and **200** of the invention with the highest ratio between the size of the wet surfaces and the amount of material used for their definition, in comparison with any other possible shape of the hollow cells **1.**

From the axonometric view of the preferred embodiment of the hollow cell **1** shown in Figure 10, it can also be noted that the latter preferably but not necessarily comprises an opening **3** for each one of the four lateral faces **21, 22, 23** and **24** which constitute the lateral surface **2** of the rhomboidal hollow cell **1.**

It cannot be excluded, however, that in alternative embodiments of the invention said opening **3** may be defined on only one, two or three of the four lateral faces **21, 22, 23** and **24** of each one of the hollow cells **1.**

Additionally, according to the preferred embodiment of the invention, as shown in Figure 10, the openings **3** made on each one of the four lateral faces **21, 22, 23** and **24** of the hollow cell **1** have a substantially triangular shape. More specifically, the aforementioned substantially triangular shape of each opening **3** has the shape of a right triangle with a first cathetus **31** defined in proximity to an edge **5** relative to the lateral face **21, 22, 23** or **24** on which said opening **3** is made. Said first cathetus **31,** in particular, is defined substantially in an orthogonal position with respect to the exposed face **102** and **202** of the volumetric receiver **100** and **200.** In contrast, the second cathetus **32** of said opening **3** is located in the lateral face **21, 22, 23** or **24** in which there is the same opening **3,** on the opposite side with respect to said exposed face **102** and **202.**

Moreover, the preferred embodiment of the invention envisages that, two by two, the adjacent lateral faces of each one of the hollow cells **1,** like for example the lateral faces indicated by **21** and **22** in Figure 10, have the respective openings **3** in the shape of a right triangle with said first catheti **31** located in proximity to the edge **5** in common with the same two adjacent lateral faces **21** and **22,** so as to create a supporting column **6** projecting perpendicularly along the entire height of the hollow cell **1** itself. Advantageously, the choice of the rhomboid shape for the hollow cell **1** and of the right triangle shape for the openings **3** defined in the hollow cell **1** itself enables the construction of the volumetric receivers of the invention, in particular those in which multiple levels are defined, by means of manufacturing techniques of the additive type, in particular by sintering metal powders.

In fact, starting from the assumption that the production of the volumetric receivers of the invention through sintering requires that the process proceed in the direction opposite that indicated by the arrow **V** in Figure 7, the choice of the particular rhomboid shape advantageously allows the exploitation of the hollow cells **1** of one specific level as a support base for the construction of the hollow cells **1** of the level immediately above. Thus this rhomboid shape makes it possible to define a structure for the volumetric receivers of the invention that is self-sustaining during their construction with said sintering techniques, while simultaneously requiring a minimum amount of solid material for the creation of two superimposed hollow cells **1.**

In particular, with reference to the supporting columns **6** shown in Figure 10, their shape allows the lower hollow cell **1** to adequately support the upper hollow cell **1** even if the contact points between said two hollow cells **1** are limited. This latter characteristic plays a very important role, especially for the hollow cells **1** created along the most external levels, in fact, allowing for the reduction of the degree of porosity of said hollow cells to a minimum and, consequently, allowing for greater penetration of the radiation **R.**

Additionally, even the aforementioned triangular shape of the openings **3,** advantageously, was defined in such a way that the lateral faces **21, 22, 23** and **24** of the hollow cells **1** are able to support themselves during the construction of the volumetric receivers of the invention by sintering.

Finally, it must be said that at present the construction of the volumetric receivers of the invention structured as described above may be performed exclusively by means of the above additive manufacturing techniques, in particular by sintering metal powders.

In any case, it cannot be excluded that in the future the production of the volumetric receivers of the invention can be performed with different construction techniques which are not currently known or are poorly developed.

Moreover, it cannot be excluded that in alternative embodiments of the invention a geometric shape other than a rhomboid shape may be defined for the aforementioned hollow cells **1,** provided that the volumetric receiver constructed with a plurality of such hollow cells **1** has the features described in the independent claim below.

According to the above, therefore, the volumetric receivers that are the subject of the invention achieve all of the set objects.

In particular, the invention achieves the object to provide a volumetric receiver which has a higher index of penetration to radiation compared to prior art volumetric receivers.

The invention furthermore achieves the object to provide a volumetric receiver that is immune or, at least, minimally subject to fluid dynamic instability due to the appearance of the phenomenon known as hot spots.

Furthermore, the invention also achieves the object to provide a volumetric receiver structured so as to allow the definition and optimization of the preferential direction of heat transfer through its solid body.

Additionally, the invention also achieves the object to provide a volumetric receiver that offers the possibility to modify a large number of physical parameters in order to optimize its performance according to the design specifications of the particular application to be implemented.

Finally, the invention also achieves the object to provide a volumetric receiver structured in such a way that it can be produced quickly and easily by means of additive manufacturing techniques, in particular by means of metal powder sintering techniques.

## Claims

1. Volumetric receiver (200) configured to absorb the radiation (R) emitted by a heat source (S) and incident on an exposed face (202) of said volumetric receiver (200) and to transfer the thermal energy induced by said absorption to a surrounding heat transfer fluid (F), said volumetric receiver (200) comprising a plurality of hollow cells (1) having the same geometric shape and whose longitudinal axes are substantially orthogonal with respect to said exposed face (202), said hollow cells (1) being adjacent and stably connected to one another so as to create at least one level (204a, 204b, 204c) substantially parallel to said exposed face (202), each one of said hollow cells (1) defining a channel that is open at both its opposing ends according to said longitudinal axis in such a way as to allow the flow of said heat transfer fluid (F) in a direction parallel to the direction of said radiation (R), **characterized in that** each one of said hollow cells (1) is furthermore provided with at least one opening (3) created at the level of its lateral surface (2) placing all said channels defined on said at least one level (204a, 204b, 204c) in communication with one another, wherein said hollow cells (1) are arranged in such a way as to define at least two levels (204a, 204b, 204c) which are substantially parallel and superimposed over each other according to a direction orthogonal to said exposed face (202), said channel of each one of said hollow cells (1) defined on a first level of said at least two levels (204a, 204b, 204c) being in direct communication with said channel of at least one of said hollow cells (1) pertaining to the second level of said at least two levels (204a, 204b, 204c), adjacent to said first level, wherein said hollow cells (1) defined on the same level (204a, 204b, 204c) have the same size and wherein said hollow cells (1) defined on one level (204a, 204b, 204c) are larger in size than the hollow cells (1) defined on the subsequent level according to the incoming direction (V) towards said volumetric receiver (200) starting from said exposed face (202).

2. Volumetric receiver (200) according to claim 1, **characterized in that** said at least two levels (204a, 204b, 204c) are at least three levels (204a, 204b, 204c) which are substantially parallel and superimposed over each other according to a direction orthogonal to said exposed face (202), said channel of each one of said hollow cells (1) defined on a first level of said at least three levels (204a, 204b, 204c) being in direct communication with said channel of at least one of said hollow cells (1) pertaining to a second level of said at least three levels (204a, 204b, 204c) adjacent to said first level, wherein said hollow cells (1) defined on the same level (204a, 204b, 204c) have the same size and wherein said hollow cells (1) defined on one level (204a, 204b, 204c) are smaller in size than the hollow cells (1) defined on the previous level (204a, 204b, 204c) and are larger in size than the hollow cells (1) defined on the subsequent level according to the incoming direction (V) towards said volumetric receiver (200) starting from said exposed face (202).

3. Volumetric receiver (200) according to any of the preceding claims, **characterized in that** said size of each hollow cell is determined by the width, the height and the length of each one of said hollow cells (1) and by the thickness of the lateral surfaces (2) of each one of said hollow cells (1).

4. Volumetric receiver (200) according to any of the preceding claims, **characterized in that** each one of said hollow cells (1) has, in top view, the shape of a parallelogram.

5. Volumetric receiver (200) according to claim 4, **characterized in that** said parallelogram shape is rhomboidal.

6. Volumetric receiver (200) according to claim 4 or 5, **characterized in that** said opening (3) is defined at least on one lateral face (21, 22, 23, 24) pertaining to the lateral surface (2) of each one of said hollow cells (1), said opening (3) having a substantially triangular shape.

7. Volumetric receiver (200) according to claim 6, **characterized in that** each one of the lateral faces (21, 22, 23, 24) of each one of said hollow cells (1) comprises an opening (3) in a substantially triangular shape.

8. Volumetric receiver (200) according to claim 6 or 7, **characterized in that** each one of said openings (3) in a substantially triangular shape has the shape of a right triangle with a first cathetus (31) defined in proximity to an edge (5) relative to the lateral face (21, 22, 23, 24) in which said opening (3) is defined, said first cathetus (31) being substantially orthogonal to said exposed face (102, 202), the second cathetus (32) of said openings (3) being defined on the lateral face (21, 22, 23, 24) in which said opening (3) is defined, from the opposite side with respect to said exposed face (102, 202).

9. Volumetric receiver (200) according to claim 8, **characterized in that** said openings (3) in the shape of a right triangle of at least two adjacent lateral faces (21, 22, 23, 24) of each one of said hollow cells (1) have said first catheti (31) defined in proximity to the edge (5) in common with said two adjacent lateral faces (21, 22, 23, 24), so as to define a supporting column (6) projecting perpendicularly for the entire height of said hollow cell (1).

## Patentansprüche

1. Volumetrischer Receiver (200), dazu konfiguriert, die durch eine Wärmequelle (S) abgegebene und auf eine exponierte Fläche (202) des besagten volumetrischen Receivers (200) einfallende Strahlung (R) zu absorbieren und die durch die besagte Absorption induzierte thermische Energie an ein umgebendes Wärmeübertragungsfluid (F) zu übertragen, wobei der besagte volumetrische Receiver (200) eine Vielzahl hohler Zellen (1) von gleicher geometrischer Form umfasst, deren Längsachsen im Wesentlichen orthogonal zu der besagten exponierten Fläche (202) verlaufen, wobei die besagten hohlen Zellen (1) aneinander anliegen und stabil miteinander verbunden sind, so dass sie wenigstens eine im Wesentlichen zu der besagten exponierten Fläche (202) parallele Ebene (204a, 204b, 204c) bilden, wobei jede der besagten hohlen Zellen (1) einen Kanal definiert, der an beiden bezüglich der besagten Längsachse einander gegenüberliegenden Enden offen ist, so dass der Fluss des besagten Wärmeübertragungsfluids (F) in eine zu der Richtung der besagten Strahlung (R) parallele Richtung erlaubt wird, **dadurch gekennzeichnet, dass** jede der besagten hohlen Zellen (1) des Weiteren mit wenigstens einer auf Ebene ihrer Seitenfläche (2) ausgeführten Öffnung (3) versehen ist, die alle besagten, auf der besagten wenigstens einen Ebene (204a, 204b, 204c) definierten Kanäle miteinander in Kommunikation versetzt, wobei die besagten hohlen Zellen (1) derart angeordnet sind, dass sie wenigstens zwei Ebenen (204a, 204b, 204c) definieren, welche im Wesentlichen parallel sind und übereinanderliegen entsprechend einer zu der besagten exponierten Fläche (202) orthogonalen Richtung, wobei der besagte Kanal jeder der besagten, auf einer ersten Ebene der besagten wenigstens zwei Ebenen (204a, 204b, 204c) definierten hohlen Zellen (1) direkt mit dem besagten Kanal von wenigstens einer der besagten hohlen Zellen (1) kommuniziert, der zu der zweiten Ebene der besagten wenigstens zwei Ebenen (204a, 204b, 204c) gehört, welche neben der besagten ersten Ebene liegt, wobei die besagten, auf derselben Ebene (204a, 204b, 204c) definierten hohlen Zellen (1) die gleiche Größe aufweisen und wobei die besagten, auf einer Ebene (204a, 204b, 204c) definierten hohlen Zellen (1) größer sind als die hohlen Zellen (1), die entsprechend der Zugangsrichtung (V) zu dem besagten volumetrischen Receiver (200) auf der nachfolgenden Ebene definiert sind, beginnend mit der besagten exponierten Fläche (202).

2. Volumetrischer Receiver (200) nach Patentanspruch 1, **dadurch gekennzeichnet, dass** die besagten wenigstens zwei Ebenen (204a, 204b, 204c) wenigstens drei Ebenen (204a, 204b, 204c) sind, die im Wesentlichen parallel sind und übereinanderliegen entsprechend einer zu der besagten exponierten Fläche (202) orthogonalen Richtung, wobei der besagte Kanal jeder der besagten, auf einer ersten Ebene der besagten wenigstens drei Ebenen (204a, 204b, 204c) definierten hohlen Zellen (1) direkt mit dem besagten Kanal von wenigstens einer der besagten hohlen Zellen (1) kommuniziert, der zu einer zweiten Ebene der besagten wenigstens drei Ebenen (204a, 204b, 204c) gehört, welche neben der besagten ersten Ebene liegt, wobei die besagten, auf derselben Ebene (204a, 204b, 204c) definierten hohlen Zellen (1) die gleiche Größe aufweisen und wobei die besagten, auf einer Ebene (204a, 204b, 204c) definierten hohlen Zellen (1) kleiner sind als die auf der vorhergehenden Ebene (204a, 204b, 204c) definierten hohlen Zellen (1), und größer sind als die auf der darauffolgenden Ebene definierten hohlen Zellen (1), entsprechend der Zugangsrichtung (V) zu dem besagten volumetrischen Receiver (200), beginnend mit der besagten exponierten Fläche (202).

3. Volumetrischer Receiver (200) nach einem jeden der vorstehenden Patentansprüche, **dadurch gekennzeichnet, dass** die besagte Größe jeder hohlen Zelle durch die Breite, die Höhe und die Länge jeder der besagten hohlen Zellen (1) sowie durch die Stärke der Seitenflächen (2) jeder der besagten hohlen Zellen (1) bestimmt ist.

4. Volumetrischer Receiver (200) nach einem jeden der vorstehenden Patentansprüche, **dadurch gekennzeichnet, dass** jede der besagten hohlen Zellen (1) in der Draufsicht die Form eines Parallelogramms hat.

5. Volumetrischer Receiver (200) nach Patentanspruch 4, **dadurch gekennzeichnet, dass** die besagte Parallelogrammform rautenförmig ist.

6. Volumetrischer Receiver (200) nach Patentanspruch 4 oder 5, **dadurch gekennzeichnet, dass** die besagte Öffnung (3) wenigstens an einer zu der Seitenfläche (2) jeder der besagten hohlen Zellen (1) gehörenden Seitenfläche (21, 22, 23, 24) definiert ist, wobei die besagte Öffnung (3) eine im Wesentlichen dreieckige Form hat.

7. Volumetrischer Receiver (200) nach Patentanspruch 6, **dadurch gekennzeichnet, dass** jede der besagten Seitenflächen (21, 22, 23, 24) jeder der besagten hohlen Zellen (1) eine Öffnung (3) von im Wesentlichen dreieckiger Form umfasst.

8. Volumetrischer Receiver (200) nach Patentanspruch 6 oder 7, **dadurch gekennzeichnet, dass** jede der besagten Öffnungen (3) von im Wesentlichen dreieckiger Form die Form eines rechtwinkligen Dreiecks hat, mit einer ersten Kathete (31), die nahe an einer Kante (5) der Seitenfläche (21, 22, 23, 24) definiert ist, in welcher die besagte Öffnung (3) definiert ist, wobei die besagte erste Kathete (31) im Wesentlichen orthogonal zu der besagten exponierten Fläche (102, 202) ist, die zweite Kathete (32) der besagten Öffnungen (3) an der Seitenfläche (21, 22, 23, 24) definiert ist, in der die besagte Öffnung (3) definiert ist, auf der der besagten exponierten Fläche (102, 202) entgegengesetzten Seite.

9. Volumetrischer Receiver (200) nach Patentanspruch 8, **dadurch gekennzeichnet, dass** die besagten ersten Katheten (31) der besagten Öffnungen (3) von der Form eines rechtwinkligen Dreiecks in wenigstens zwei angrenzenden Seitenflächen (21, 22, 23, 24) jeder der besagten hohlen Zellen (1) nahe an der Kante (5) definiert sind, welche den besagten zwei angrenzenden Seitenflächen (21, 22, 23, 24) gemeinsam ist, um eine Tragsäule (6) zu bilden, die lotrecht über die gesamte Höhe der besagten hohlen Zelle (1) herausragt.

## Revendications

1. Récepteur volumétrique (200) configuré pour absorber les radiations (R) émises par une source de chaleur (S) et incidentes sur une face exposée (202) dudit récepteur volumétrique (200) et pour transférer l'énergie thermique induite par ladite absorption à un fluide calorifique environnant (F), ledit récepteur volumétrique (200) comprenant une pluralité de cellules creuses (1) ayant la même forme géométrique et dont les axes longitudinaux sont essentiellement perpendiculaires par rapport à ladite face exposée (202), lesdites cellules creuses (1) étant adjacentes et reliées entre elles de manière stable de manière à définir au moins un niveau (204a, 204b, 204c) essentiellement parallèle à ladite face exposée (202), chacune desdites cellules creuses (1) définissant un canal qui est ouvert à hauteur des leurs deux extrémités opposées selon ledit axe longitudinal de manière à permettre l'écoulement dudit fluide calorifique (F) dans une direction parallèle à la direction desdites radiations (R), **caractérisé en ce que** chacune desdites cellules creuses (1) est dotée en outre d'au moins une ouverture (3) réalisée à hauteur de sa surface latérale (2) mettant tous lesdits canaux définis sur ledit au moins un niveau (204a, 204b, 204c) en communication entre eux,
où lesdites cellules creuses (1) sont disposées de manière à définir au moins deux niveaux (204a, 204b, 204c) qui sont essentiellement parallèles et superposés entre eux selon une direction orthogonale à ladite face exposée (202), ledit canal de chacune desdites cellules creuses (1) définies sur un premier niveau desdits au moins deux niveaux (204a, 204b, 204c) étant en communication directe avec ledit canal d'au moins une desdites cellules creuses (1) appartenant au deuxième niveau desdits au moins deux niveaux (204a, 204b, 204c), adjacents audit premier niveau, où lesdites cellules creuses (1) définies sur le même niveau (204a, 204b, 204c) présentent la même dimension et où lesdites cellules creuses (1) définies sur un niveau (204a, 204b, 204c) ont des dimensions plus grandes que les cellules creuses (1) définies sur le niveau suivant selon la direction entrante (V) vers ledit récepteur volumétrique (200) en commençant par ladite face exposée (202).

2. Récepteur volumétrique (200) selon la revendication 1, **caractérisé en ce que** lesdits au moins deux niveaux (204a, 204b, 204c) sont au moins trois niveaux (204a, 204b, 204c) qui sont essentiellement parallèles et superposés l'un sur l'autre selon une direction orthogonale à ladite face exposée (202), ledit canal de chacune desdites cellules creuses (1) définies sur un premier niveau desdits au moins trois niveaux (204a, 204b, 204c) étant en communication directe avec ledit canal d'au moins une desdites cellules creuses (1) appartenant à un deuxième niveau desdits au moins trois niveaux (204a, 204b, 204c), adjacent audit premier niveau, où lesdites cellules creuses (1) définies sur le même niveau (204a, 204b, 204c) présentent la même dimension et où lesdites cellules creuses (1) définies sur un niveau (204a, 204b, 204c) ont des dimensions plus petites que les cellules creuses (1) définies sur le niveau précédent (204a, 204b, 204c) et ont des dimensions plus larges que les cellules creuses (1) définies sur le niveau suivant selon la direction entrante (V) vers ledit récepteur volumétrique (200) en commençant par ladite face exposée (202).

3. Récepteur volumétrique (200) selon l'une quelconque des revendications précédentes, **caractérisé en ce que** lesdites dimensions de chaque cellule creuse sont déterminées par la largeur, la hauteur et la longueur de chacune desdites cellules creuses (1) et par l'épaisseur des surfaces latérales (2) de chacune desdites cellules creuses (1).

4. Récepteur volumétrique (200) selon l'une quelconque des revendications précédentes, **caractérisé en ce que** chacune desdites cellules creuses (1) présente, selon une vue d'en haut, la forme d'un parallélogramme.

5. Récepteur volumétrique (200) selon la revendication 4, **caractérisé en ce que** ladite forme de parallélogramme est une forme rhomboïdale.

6. Récepteur volumétrique (200) selon la revendication 4 ou 5, **caractérisé en ce que** ladite ouverture (3) est définie au moins sur une face latérale (21, 22, 23, 24) appartenant à la surface latérale (2) de chacune desdites cellules creuses (1), ladite ouverture (3) présentant une forme essentiellement triangulaire.

7. Récepteur volumétrique (200) selon la revendication 6, **caractérisé en ce que** chacune des faces latérales (21, 22, 23, 24) de chacune desdites cellules creuses (1) comprend une ouverture (3) ayant une forme essentiellement triangulaire.

8. Récepteur volumétrique (200) selon la revendication 6 ou 7, **caractérisé en ce que** chacune desdites ouvertures (3) de forme essentiellement triangulaire présente la forme d'un triangle rectangle avec une première cathète (31) définie à proximité d'une arête (5) relative à la face latérale (21, 22, 23, 24) où ladite ouverture (3) est définie, ladite première cathète (31) étant essentiellement orthogonale à ladite face exposée (102, 202), la deuxième cathète (32) desdites ouvertures (3) étant définie sur la face latérale (21, 22, 23, 24) où ladite ouverture (3) est définie, de la partie opposée par rapport à ladite face exposée (102, 202).

9. Récepteur volumétrique (200) selon la revendication 8, **caractérisé en ce que** lesdites ouvertures (3) en forme de triangle rectangle d'au moins deux faces latérales adjacentes (21, 22, 23, 24) de chacune desdites cellules creuses (1) présentent lesdites premières cathètes (31) définies à proximité de l'arête (5) en commun avec lesdites deux faces latérales adjacentes (21, 22, 23, 24) de manière à définir une colonne de soutien (6) saillant perpendiculairement pour toute la hauteur de ladite cellule creuse (1).
